# EUROPÄISCHE PATENTSCHRIFT

(11) **EP 2 710 286 B1**
(45) Veröffentlichungstag und Bekanntmachung des Hinweises auf die Patenterteilung: **25.10.2017**
(21) Anmeldenummer: 12718920.7
(22) Anmeldetag: 03.05.2012
(51) Int. Cl.: F16K 31/122, B05B 1/30, B05B 5/16

(54) **VENTIL**
VALVE
SOUPAPE

(30) Priorität: 19.05.2011 DE 102011101978
(43) Veröffentlichungstag der Anmeldung: 26.03.2014
(73) Patentinhaber: Eisenmann SE, 71032 Böblingen (DE)
(72) Erfinder: REICHLER, Jan, 78465 Konstanz (DE); MAURMAIER, Simon, 70435 Stuttgart (DE); MOLL, Mathias, 71032 Böblingen (DE)
(74) Vertreter: Ostertag & Partner Patentanwälte mbB
(86) Internationale Anmeldenummer: PCT/EP2012/001894
(87) Internationale Veröffentlichungsnummer: WO 2012/156032

(56) Entgegenhaltungen:
- EP-A2- 1 154 182
- EP-A2- 1 801 478
- DE-A1-102006 025 549

## Beschreibung

Die Erfindung betrifft ein Ventil zur Verwendung in Verbindung mit einer Applikationseinrichtung, wie es beispielsweise aus dem den nächstkommenden Stand der Technik darstellenden Dokument EP-A-1 154 182 bekannt ist. Weitere Ventile sind beispielsweise aus der DE 10 2006 025 549 A1 bekannt und werden bei Applikationseinrichtungen, z.B. bei Spritzpistolen, zur Steuerung des Beschichtungsmaterialflusses eingesetzt.
Das in der DE 10 2006 025 549 A1 beschriebene Ventil wird insbesondere bei elektrostatisch arbeitenden Applikationseinrichtungen eingesetzt. Bei derartigen Applikationseinrichtungen wird das Beschichtungsmaterial elektrostatisch auf einen zu beschichtenden Gegenstand gezogen, indem die Applikationseinrichtung auf hohem elektrischen Potential liegt, wogegen der zu beschichtende Gegenstand auf Massepotential liegt.
Das Dichtelement des Ventils arbeitet mit einem Ventilsitz zusammen, den es verschließt oder freigibt, wenn die Ventilspindel im Ventilgehäuse ihre Schließstellung bzw. ihre Freigabestellung einnimmt. Die Ventilspindel nimmt dabei in der Regel unter Vorspannung ihre Schließstellung ein; ein Umschalten zwischen der Schließstellung und der Freigabestellung der Ventilspindel wird bei bekannten Ventilen mittels eines Druckfluids in Form von Druckluft bewirkt, die in der Regel mit einem moderaten Arbeitsdruck von etwa 6 bar vorliegt.
Beim Umschalten zwischen der Schließstellung und der Freigabestellung der Ventilspindel sind generell kurze Schaltzeiten wünschenswert, die bei bekannten Ventilen jedoch bei den eingesetzten Drücken nicht immer erreicht werden.
Es ist daher Aufgabe der Erfindung, ein Ventil der eingangs genannten Art bereitzustellen, welches schnellere Umschaltzeiten zwischen der Schließstellung und der Freigabestellung der Ventilspindel ermöglicht.

Diese Aufgabe wird durch ein Ventil mit den im Anspruch 1 definierten Merkmalen gelöst. Durch die wenigstens zwei Kolbenelemente kann die Wirkfläche der Ventilspindel effektiv erhöht werden, auf welche das Druckfluid eine Kraft ausüben kann, um die Ventilspindel zu bewegen. Hierdurch beschleunigt sich die Bewegung der Ventilspindel, wodurch die Schaltzeit des Ventils verkürzt, ohne dass hierzu der Arbeitsdruck des Druckfluids erhöht werden muss oder die Baumaße des Ventils vergrößert werden müssen. Erfindungsgemäss sind der erste und der zweite Kolbenraum über Radialkanäle mit einer außenliegenden Umfangsnut im Ventilgehäuse verbunden. Wenn das Ventil im Gebrauch in üblicher Weise in einer Ventilaufnahme einsitzt, wird so zwischen deren Innenmantelfläche und der Umfangsnut ein Ringraum gebildet, dem dann zum Betätigen des Ventils ein Druckfluid zugeführt werden kann, das von dort sowohl zum ersten als auch zum zweiten Kolbenraum gelangt. Es ist insbesondere von Vorteil, wenn Dichtmittel vorgesehen sind, die das erste Kolbenelement und/oder das zweite Kolbenelement gegen die Innenwand des zugehörigen ersten oder zweiten Kolbenraums abdichten und ein Elastomer-Material, insbesondere ein Perfluorelastomer-Material, umfassen. Hierdurch kann eine besonderes gute Dichtwirkung erzielt werden, so dass ein Druckabfall in den Kolbenräumen vermieden und das Druckfluid effektiv genutzt wird.
Es ist fertigungstechnisch günstig, wenn das Ventilgehäuse mehrteilig ausgebildet ist.
Ebenfalls vorteilhaft ist es, wenn die Ventilspindel mehrteilig ausgebildet ist.
Es haben sich Ventile etabliert, bei denen das zweite freie Ende der Ventilspindel durch das Ventilgehäuse hindurch mit der Umgebung in Kontakt steht. Dies ist bautechnisch begründet, wenn beispielsweise eine Öffnung im Ventilgehäuse zum Druckausgleich verbleibt, ohne dass es durch ein weiteres Gehäuse oder ähnliches abgedeckt wird. Letzteres kommt häufig vor, um die das Ventil aufnehmende Einheit möglichst kleinbauend ausbilden zu können.

Problematisch beim Einsatz derartiger Ventile in Verbindung mit auf hohem elektrischen Potential stehenden Applikationseinrichtungen ist es, wenn die Ventilspindeln aus leitfähigem, meist metallischem Material bestehen. Über das freiliegende zweite Ende der Ventilspindel kann es zu unerwünschten Spannungsüberschlägen kommen, die gegebenenfalls mit Funkenbildung verbunden sind. Letzteres stellt insbesondere bei Lackieranlagen ein hohes Sicherheitsrisiko dar, da durch Funken im schlimmsten Fall eine Explosion ausgelöst werden kann.

Daher ist es vorteilhaft, wenn ein zweites freies Ende der Ventilspindel durch das Ventilgehäuse hindurch mit der Umgebung in Kontakt steht und aus einem elektrisch gut isolierenden Isolationsmaterial gefertigt ist.

In der Praxis hat es sich als günstig erwiesen, wenn das Isolationsmaterial ein Kunststoff, insbesondere ein Kunststoff aus der Gruppe der Polyetherketone, vorzugsweise ein Polyaryletherketon (PEK) oder ein Polyetheretherketon (PEEK), ist.

Alternativ kann das Isolationsmaterial eine Keramik, insbesondere eine glasierte Feinkeramik, sein.

Im Hinblick auf das Dichtelement ist es dagegen günstig, wenn dieses aus einem elektrisch leitfähigen Material, insbesondere aus einem dotierten Kunststoff, gefertigt ist. Auf diese Weise kann ein Potentialausgleich zwischen der Ventilspindel und einem Ventilsitz erfolgen.

Dabei ist das Dichtelement vorzugsweise aus PA12 Graphit gefertigt.

Nachstehend wird ein Ausführungsbeispiel der Erfindung anhand der Zeichnungen näher erläutert. In diesen zeigen:
Figur 1 eine perspektivische Ansicht eines Ventils;
Figur 2 einen Längsschnitt des Ventils von Figur 1.

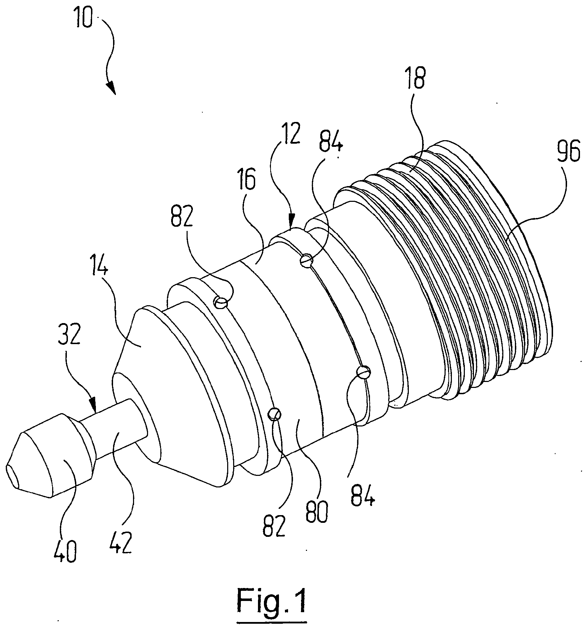

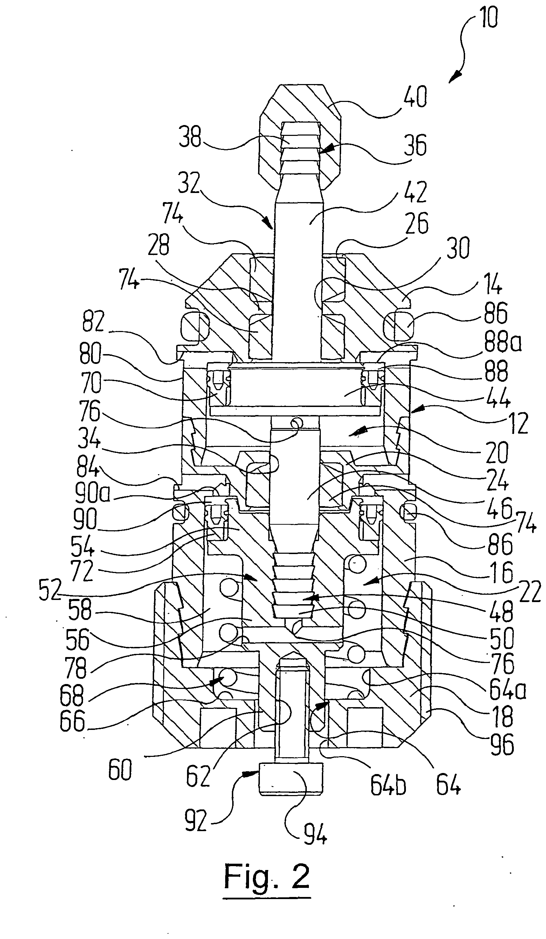

In den Figuren 1 und 2 ist mit 10 insgesamt ein Ventil bezeichnet, welches mittels eines Druckfluids, insbesondere mittels Druckluft, betätigbar ist. Das Ventil 10 umfasst ein mehrteiliges Ventilgehäuse 12 mit einem stirnseitig kegelstumpfförmigen ersten Gehäuseteil 14, einem röhrenförmigen zweiten Gehäuseteil 16 und einem dritten becherförmigen Gehäuseteil 18, die koaxial zueinander angeordnet und über nicht eigens gekennzeichnete Rastverbindungen miteinander verbunden sind. Bei einer Abwandlung kann das Ventilgehäuse 12 auch einteilig ausgebildet sein.

Das Ventilgehäuse 12 begrenzt einen ersten Kolbenraum 20 und einen zweiten Kolbenraum 22, die bezogen auf das Ventil 10 in axialer Richtung hintereinander angeordnet sind und beim vorliegenden Ausführungsbeispiel gleichen Querschnitt haben. Der erste Kolbenraum 20 und der zweite Kolbenraum 22 sind durch eine Zwischenwand 24 getrennt, die von dem zweiten Gehäuseteil 16 umfasst ist.

Von außen erstreckt sich ein Durchgang 26 durch das erste Gehäuseteil 14, der in den ersten Kolbenraum 20 mündet und koaxial zu diesem verläuft. Der Durchgang 26 weist dabei einen radial nach innen ragenden Führungskragen 28 auf, der einen Führungsdurchgang 30 für eine Ventilspindel 32 vorgibt, die verschiebbar innerhalb des Ventilgehäuses 12 gelagert ist. Die Zwischenwand 24 weist einen zu diesem Führungsdurchgang 30 im ersten Gehäuseteil 14 komplementären und koaxialen Führungsdurchgang 34 auf.

Die Ventilspindel 32 weist nun an einem Spindelkopfende 36 einen Rastabschnitt 38 auf, der sich außerhalb des Ventilgehäuses 12 befindet und durch mehrere konische Rastnasen gebildet ist. Ein Dichtelement 40 ist durch Aufstecken auf den Rastabschnitt 38 auf der Ventilspindel 32 verrastet.

Dem Rastabschnitt 38 der Ventilspindel 32 folgt ein erster Führungsabschnitt 42 mit kreisrundem Querschnitt, der in dem dazu komplementären Führungsdurchgang 30 im ersten Gehäuseteil 14 läuft und in einen umlaufenden radial überstehenden ersten Kolbenflansch 44 übergeht, der ein erstes Kolbenelement bildet und bewegungsfest von der Ventilspindel 32 umfasst ist. Der erste Kolbenflansch 44 befindet sich im ersten Kolbenraum 20 und hat in axialer Richtung eine Erstreckung, die kürzer ist als die Länge des ersten Kolbenraums 20 in dieser Richtung.

An den ersten Kolbenflansch 44 schließt sich ein zweiter Führungsabschnitt 46 der Ventilspindel 32 an, der ebenfalls einen kreisrunden Querschnitt hat und sich durch den dazu komplementären zweiten Führungsdurchgang 34 in der Zwischenwand 24 hindurch erstreckt.

Die Ventilspindel 32 kann einteilig sein, ist beim vorliegenden Ausführungsbeispiel jedoch mehrteilig, wozu der zweite Führungsabschnitt 46 im Bereich des zweiten Kolbenraums 22 in einen Rastaufsatz 48 übergeht, welcher dem Spindelkopfende 36 gegenüberliegt und wie dieses einen Rastabschnitt der Ventilspindel 32 bildet, der mit 50 bezeichnet ist und mehrere konische Rastnasen umfasst.

Auf diesen Rastaufsatz 48 ist ein Kolbenendstück 52 aufgesteckt und verrastet, welches in axialer Richtung auf das dritte Gehäuseteil 18 des Ventilgehäuses 12 zu betrachtet drei Abschnitte umfasst. Der erste Abschnitt ist als zweiter Kolbenflansch 54 ausgebildet, der sich im zweiten Kolbenraum 22 befindet und in axialer Richtung eine Erstreckung hat, die kürzer ist als die Länge des zweiten Kolbenraums 22 in dieser Richtung. Der zweite Kolbenflansch 54 bildet somit ein zweites Kolbenelement des Ventils 10 und ist ebenfalls bewegungsfest von der Ventilspindel 32 umfasst.

Der zweite Abschnitt des Kolbenendstücks 52 ist ein Führungsabschnitt 56. Dieser hat einen gegenüber dem zweiten Kolbenflansch kleinerem Querschnitt, so dass zwischen dem Führungsabschnitt 56 und der Innenmantelfläche des zweiten Kolbenraums 22 ein Ringraum 58 verbleibt.

Ein Endabschnitt 60 des Kolbenendstücks 52 schließlich bildet dessen dritten Abschnitt. Dieser hat gegenüber dem Führungsabschnitt 56 einen nochmals verringerten Querschnitt und weist auf seiner freien Stirnseite eine Gewindesackbohrung 62 auf. Der Endabschnitt 60 des Kolbenendstücks 52 ragt in einen Stufendurchgang 64 im dritten Gehäuseteil 18 hinein, der seinerseits einen ersten Stufenabschnitt 64a und einen zweiten Stufenabschnitt 64b mit kleinerem Querschnitt hat. Der erste Stufenabschnitt 64a ist dabei dem zweiten Kolbenraum 22 zugewandt, so dass am Übergang zwischen dem ersten und dem zweiten Stufenabschnitt 64a, 64b eine Anlageringfläche 66 gebildet ist.

An diese Anlageringfläche 66 liegt eine Schraubenfeder 68 an, die sich in den zweiten Kolbenraum 22 hinein erstreckt und an ihrem gegenüberliegenden Ende gegen den Kolbenflansch 54 des Kolbenendstücks 52 andrückt.

Durch die Schraubenfeder 68 wird die Ventilspindel 32 unter Federvorspannung in eine Schließstellung gedrückt, in der die Ventilspindel 32 aus dem Ventilgehäuse 12 ausgefahren ist.

Der erste Kolbenflansch 44 und der zweite Kolbenflansch 54 sind derart auf der Ventilspindel 32 angeordnet, dass sie in der Schließstellung des Ventils 10 in Richtung auf das Dichtelement 40 zu gegen die Stirninnenflächen des ersten bzw. des zweiten Kolbenraums 20, 22 anliegen, wie es in Figur 2 zu erkennen ist.

Die Ventilspindel 32 kann aus dieser Schließstellung in eine Freigabestellung in das Ventilgehäuse 12 eingefahren werden. Maximal kann die Ventilspindel 32 dabei so weit in das Ventilgehäuse 12 eingefahren werden, bis der erste Kolbenflansch 44 in Richtung auf das dritte Gehäuseteil 18 zu gegen die Stirninnenfläche der Zwischenwand 24 anliegt, die dem ersten Kolbenraum 20 zugewandt ist.

Der erste Kolbenflansch 44 und der zweite Kolbenflansch 54 tragen in Umfangsrichtung jeweils einen Dichtring 70 bzw. 72, welche die Kolbenflansche 44, 54 jeweils gegen die Innenwand des ersten Kolbenraums 20 bzw. des zweiten Kolbenraums 22 abdichten. Außerdem sind am Führungsdurchgang 30 des ersten Gehäuseteils 14 und am Führungsdurchgang 34 in der Zwischenwand 24 Ringdichtungen 74 vorhanden, welche den ersten Führungsabschnitt 42 bzw. den zweiten Führungsabschnitt 46 der Ventilspindel 32 dichtend führen.

Auf diese Weise ist der erste Kolbenraum 20 in Richtung des Durchgangs 26 im ersten Gehäuseteil 14 gegen die Umgebung und in Richtung des Führungsdurchgangs 34 in der Zwischenwand 24 gegen den zweiten Kolbenraum 22 abgedichtet. Im Gegensatz dazu ist der zweite Kolbenraum 22 über den Stufendurchgang 64 im dritten Gehäuseteil 18 mit der Umgebung verbunden.

Um bei einer Bewegung der Ventilspindel 32 aus der Schließstellung in die Freigabestellung einen Druckausgleich zu ermöglichen, sind in der Ventilspindel 32 Kanäle 76 und in dem Kolbenendstück 52 Kanäle 78 vorhanden, welche insgesamt einen Strömungsweg zwischen dem ersten Kolbenraum 20 und dem zweiten Kolbenraum 22 schaffen.

Das erste und das zweite Gehäuseteil 14 und 16 des Ventilgehäuses 12 geben zusammengefügt eine außenliegende Umfangsnut 80 mit relativ großer Längserstreckung vor, deren Nutgrund von Radialkanälen 82 im ersten Gehäuseteil 14 und von Radialkanälen 84 im zweiten Gehäuseteil 16 angeschnitten wird, die jeweils in Umfangsrichtung gleichmäßig verteilt sind. Über die Radialkanäle 82 kommuniziert der erste Kolbenraum 20 mit der Umfangsnut 80, wogegen über die Radialkanäle 84 der zweite Kolbenraum 22 mit der Umfangsnut 80 verbunden ist.

In axialer Richtung ist die Umfangsnut 80 von zwei Dichtringen 86 flankiert, die in nicht eigens mit einem Bezugzeichen versehenen Nuten einsitzen. Wenn das Ventil 10 in eine hier nicht dargestellte Ventilaufnahme eingesetzt ist, begrenzen diese Dichtringe 86 mit der Umfangsnut 80 und der Innenmantelfläche der Ventilaufnahme einen ringförmigen Druckraum. Dieser wird zum Betätigen des Ventils mit einem Druckfluid in Form von Druckluft beaufschlagt, welche durch die Radialkanäle 82, 84 in die Kolbenräume 20 und 22 eindringt und dort eine Kraft auf den ersten Kolbenflansch 44 und den zweiten Kolbenflansch 54 ausübt.

Die Radialkanäle 82, 84 münden dabei jeweils an dem Stirnende in den jeweiligen Kolbenraum 20, 22, das dem Dichtelement 40 an der Ventilspindel 32 zugewandt ist.

Auf diese Weise erreicht die Druckluft jeweils eine Ring-Druckfläche 88a bzw. 90a des ersten Kolbenflansches 44 bzw. des zweiten Kolbenflansches 54, die jeweils in Richtung des Dichtelements 40 an der Ventilspindel 32 weisen. Beim vorliegenden Ausführungsbeispiel sind die Druckflächen 88a und 90a jeweils durch einen Ringaufsatz 88 bzw. 90 auf den Dichtringen 70 bzw. 72 des ersten und des zweiten Kolbenflansches 44 und 54 gebildet, die ebenfalls gegen die Innenwand des jeweiligen Kolbenraums 20, 22 abdichten. Die Ringaufsätze 88 und 90 sind beispielsweise aus einem Perfluorelastomer in Form von Perfluorkautschuk gefertigt. Perfluorkautschuk ist allgemein unter den Abkürzungen FFKM oder FFPM bekannt.

Allgemein ausgedrückt kann über die Radialkanäle 82 und 84 dem ersten Kolbenraum 20 und dem zweiten Kolbenraum 22 jeweils Druckluft derart zugeführt werden, dass auf das erste Kolbenelement 20 und auf das zweite Kolbenelement 22 eine in dieselbe Richtung wirkende Kraft ausgeübt wird.

Wird die Druckluftbeaufschlagung beendet, springt die Ventilspindel 32 durch die Federkraft der Schraubenfeder 68 wieder in ihre Schließstellung zurück.

Um die Wegstrecke zwischen der Schließstellung und der Freigabestellung des Dichtelements 40 des Ventils 10 einstellen zu können, ist in die Gewindesackbohrung 62 des Kolbenendstücks 52 eine Stellschraube 92 eingedreht. Diese erstreckt sich durch den Abschnitt 64b des Stufendurchgangs 64 im dritten Gehäuseteil 18 hindurch, so dass ihr Kopf 94 außerhalb des Ventilgehäuses 12 angeordnet ist. Gegebenenfalls kann ein mechanischer Anschlag hinter dem Ventil 10 vorgesehen werden, gegen welchen der Kopf 94 der vollständig in die Gewindesackbohrung 62 eingedrehten Stellschraube 92 anliegt, wenn sich die Ventilspindel 32 bzw. das Dichtelement 40 in der Freigabestellung befindet.

Dem Dichtelement 40 kann eine andere Freigabestellung zugeordnet werden, indem die Stellschraube 92 aus der Gewindesackbohrung 62 herausgedreht wird.

Hierdurch kann eine weitere Bewegung der Ventilspindel 32 unterbunden werden, auch wenn der erste Kolbenflansch 44 noch nicht an der Zwischenwand 24 anliegt. Die Verkürzung des Hubweges der Ventilspindel 32 entspricht dem Ausmaß, in dem die Stellschraube 92 aus der Gewindesackbohrung 62 heraus gedreht wird.

Zudem kann der Kopf 94 der Stellschraube 92 mittels eines Werkszeugs wie einer Zange gegriffen werden, um eine gegebenenfalls schwergängige Ventilspindel 32 manuell im Ventilgehäuse 12 zu bewegen, um eine festsitzende Ventilspindel 32 wieder gängig zu machen.

Damit das Ventil 10 sicher in einer Ventilaufnahme befestigt werden kann, trägt das dritte Gehäuseteil 18 ein Außengewinde 96. So kann das Ventil 10 in eine entsprechend angepasste Ventilaufnahme mit komplementärem Innengewinde eingeschraubt werden.

Die Stellschraube 92 und das Kolbenendstück 52 bilden gemeinsam das zweite Ende der Ventilspindel 32 und stehen durch den Stufendurchgang 64 im dritten Gehäuseteil 18 des Ventilgehäuses 12 mit der Umgebung in Kontakt. Wird das Ventil 10 bei einer Applikationseinrichtung verwendet, die auf hohem elektrischen Potential steht, könnte es über die Stellschraube 92 oder das Kolbenendstück 52 an der Ventilspindel 32 zu Spannungsüberschlägen kommen.

Um dies zu verhindern, ist zumindest die Stellschraube 92 aus einem Material gefertigt, welches elektrisch gut isolierend ist. Als Material dazu kommt ein nicht leitfähiger Kunststoff in Frage, insbesondere ein Kunststoff aus der Gruppe der Polyetherketone. Gute Ergebnisse konnten dabei mit einem Polyaryletherketon (PEK) oder einem Polyetheretherketon (PEEK) erzielt werden. Alternativ kann auch eine Keramik, insbesondere eine glasierte Feinkeramik ,vorgesehen sein.

Gegebenenfall ist auch das Kolbenendstück 52 oder sogar die gesamte Ventilspindel 32 und in letzterem Fall auch das Dichtelement 40 aus solchen Materialien gefertigt.

Das Dichtelement 40 ist vorliegend zum Potentialausgleich zwischen der Ventilspindel 32 und einem Ventilsitz der Ventilaufnahme aus einem elektrisch leitfähigen Material. In der Praxis haben sich als elektrisch leitfähiges Material leitfähige dotierte Kunststoffe bewährt, wie beispielsweise PA12 Graphit.

Üblicherweise werden druckluftbetätigte Farbventile mit Druckluft bei etwa 6 bar betätigt. Durch die beiden Kolbenflansche 44 und 54 in den beiden Kolbenräumen 20 und 22 ist nun gegenüber bislang bekannten Ventilen die Wirkfläche der Ventilspindel 32 für solche Druckluft insgesamt vergrößert und dessen Schaltzeit verkürzt, ohne dass hierzu größere Abmessungen des Ventils 10 nötig sind.

Gegebenenfalls kann die Ventilspindel 32 noch ein oder mehr weitere Kolbenelemente umfassen, die jeweils in einem eigenen Kolbenraum angeordnet und in der oben beschriebenen Art und Weise mit einem Druckfluid beaufschlagbar sind.

## Patentansprüche

1. Ventil zur Verwendung in Verbindung mit einer Applikationseinrichtung, welches umfasst:
a) ein Ventilgehäuse (12);
b) eine Ventilspindel (32), welche an einem ersten freien Ende (36) außerhalb des Ventilgehäuses (12) ein Dichtelement (40) trägt und zwischen einer Schließstellung und einer Freigabestellung innerhalb des Ventilgehäuses (12) verschiebbar gelagert ist;
wobei
c) die Ventilspindel (32) wenigstens ein erstes Kolbenelement (44) und ein zweites Kolbenelement (54) umfasst;
d) das Ventilgehäuse (12) wenigstens einen ersten Kolbenraum (20) und einen zweiten Kolbenraum (22) begrenzt;
e) das erste Kolbenelement (44) in dem ersten Kolbenraum (20) und das zweite Kolbenelement (54) in dem zweiten Kolbenraum (22) geführt ist;
f) dem ersten Kolbenraum (20) und dem zweiten Kolbenraum (22) jeweils ein Druckfluid derart zuführbar ist, dass auf das erste Kolbenelement (44) und auf das zweite Kolbenelement (54) eine in dieselbe Richtung wirkende Kraft ausgeübt wird, und wobei
g) der erste und der zweite Kolbenraum (20,22) über Radialkanäle (82, 84) mit einer außenliegenden Umfangsnut (80) des Ventilgehäuses (12) verbunden sind.

2. Ventil nach Anspruch 1, **dadurch gekennzeichnet, dass** Dichtmittel (70, 72, 88, 90) vorgesehen sind, die das erste Kolbenelement (44) und/oder das zweite Kolbenelement (54) gegen die Innenwand des zugehörigen ersten oder zweiten Kolbenraums (20, 22) abdichten und ein Elastomer-Material, insbesondere ein Perfluorelastomer-Material, umfassen.

3. Ventil nach einem der Ansprüche 1 bis 2, **dadurch gekennzeichnet, dass** das Ventilgehäuse (12) mehrteilig ausgebildet ist.

4. Ventil nach einem der Ansprüche 1 bis 3, **dadurch gekennzeichnet, dass** die Ventilspindel (32) mehrteilig ausgebildet ist.

5. Ventil nach einem der vorhergehenden Ansprüche, **dadurch gekennzeichnet, dass** ein zweites freies Ende (52, 92) der Ventilspindel (32) durch das Ventilgehäuse (12) hindurch mit der Umgebung in Kontakt steht und aus einem elektrisch gut isolierenden Isolationsmaterial gefertigt ist.

6. Ventil nach Anspruch 5, **dadurch gekennzeichnet, dass** das Isolationsmaterial ein Kunststoff, insbesondere ein Kunststoff aus der Gruppe der Polyetherketone, vorzugsweise ein Polyaryletherketon (PEK) oder ein Polyetheretherketon (PEEK), ist.

7. Ventil nach Anspruch 5, **dadurch gekennzeichnet, dass** das Isolationsmaterial eine Keramik, insbesondere eine glasierte Feinkeramik, ist.

8. Ventil nach einem der Ansprüche 1 bis 7, **dadurch gekennzeichnet; dass** das Dichtelement (40) aus einem elektrisch leitfähigen Material, insbesondere aus einem dotierten Kunststoff, gefertigt ist.

9. Ventil nach Anspruch 8, **dadurch gekennzeichnet, dass** das Dichtelement (40) aus PA12 Graphit gefertigt ist.

## Claims

1. Valve for use in conjunction with an application device, comprising:
a) a valve housing (12);
b) a valve spindle (32), which bears a sealing element (40) at a first free end (36) outside the valve housing (12) and is mounted between a closing position and a releasing position within the valve housing (12) in a sliding fashion;
wherein
c) the valve spindle (32) comprises at least a first piston element (44) and a second piston element (54);
d) the valve housing (12) borders at least a first piston space (20) and a second piston space (22);
e) the first piston element (44) is guided in the first piston space (20) and the second piston element (54) is guided in the second piston space (22) ;
f) a pressure fluid may be supplied in each case to the first piston space (20) and to the second piston space (22) in such a manner that a force acting in the same direction is exerted on the first piston element (44) and on the second piston element (54), and wherein
g) the first and the second piston space (20, 22) are connected by radial channels (82, 84) to an outer circumferential groove (80) of the valve housing (12) .

2. Valve according to claim 1, **characterized in that** sealing means (70, 72, 88, 90) are provided, which seal the first piston element (44) and/or the second piston element (54) against the inner wall of the associated first or second piston space (20, 22) and comprise an elastomer material, in particular a perfluoroelastomer material.

3. Valve according to one of claims 1 to 2, **characterized in that** the valve housing (12) is of a multipart construction.

4. Valve according to one of claims 1 to 3, **characterized in that** the valve spindle (32) is of a multipart construction.

5. Valve according to one of the preceding claims, **characterized in that** a second free end (52, 92) of the valve spindle (32) is in contact with the environment through the valve housing (12) and is manufactured from an electrically highly insulating insulation material.

6. Valve according to claim 5, **characterized in that** the insulation material is a plastic material, in particular a plastic material from the group of polyether ketones, preferably a polyaryl ether ketone (PEK) or a polyether ether ketone (PEEK).

7. Valve according to claim 5, **characterized in that** the insulation material is a ceramic, in particular a glazed fine ceramic.

8. Valve according to one of claims 1 to 7, **characterized in that** the sealing element (40) is manufactured from an electrically conductive material, in particular from a doped plastic material.

9. Valve according to claim 8, **characterized in that** the sealing element (40) is manufactured from PA12 graphite.

## Revendications

1. Soupape destinée à être utilisée en association avec un dispositif applicateur, laquelle comprend :
a) un boîtier de soupape (12) ;
b) une tige de soupape (32) qui, à une première extrémité libre (36), porte à l'extérieur du boîtier de soupape (12) un élément d'étanchéité (40), et qui est montée à déplacement entre une position de fermeture et une position de libération à l'intérieur du boîtier de soupape (12) ;
sachant que
c) la tige de soupape (32) comprend au moins un premier élément piston (44) et un deuxième élément piston (54) ;
d) le boîtier de soupape (12) délimite au moins une première chambre de piston (20) et une deuxième chambre de piston (22) ;
e) le premier élément piston (44) est guidé dans la première chambre de piston (20) et le deuxième élément piston (54) dans la deuxième chambre de piston (22) ;
f) un fluide sous pression peut être apporté respectivement à la première chambre de piston (20) et à la deuxième chambre de piston (22) de telle sorte qu'une force agissant dans la même direction est exercée sur le premier élément piston (44) et sur le deuxième élément piston (54),
et sachant que
g) la première chambre de piston (20) et la deuxième chambre de piston (22) sont reliées par l'intermédiaire de canaux radiaux (82, 84) à une rainure périphérique extérieure (80) du boîtier de soupape (12).

2. Soupape selon la revendication 1, **caractérisée en ce qu'**il est prévu des moyens d'étanchéité (70, 72, 88, 90), qui étanchéifient le premier élément piston (44) et/ou le deuxième élément piston (54) contre la paroi intérieure de la première ou deuxième chambre de piston associée (20, 22) et qui comprennent un matériau élastomère, en particulier un matériau élastomère perfluoré.

3. Soupape selon la revendication 1 ou 2, **caractérisée en ce que** le boîtier de soupape (12) est réalisé en plusieurs parties.

4. Soupape selon l'une des revendications 1 à 3, **caractérisée en ce que** la tige de soupape (32) est réalisée en plusieurs parties.

5. Soupape selon l'une des revendications précédentes, **caractérisée en ce qu'**une deuxième extrémité libre (52, 92) de la tige de soupape (32) est en contact avec l'environnement en traversant le boîtier de soupape (12) et est fabriquée en un matériau isolant assurant une bonne isolation électrique.

6. Soupape selon la revendication 5, **caractérisée en ce que** le matériau isolant est une matière plastique, en particulier une matière plastique du groupe des polyéthercétones, de préférence un polyaryléthercétone (PEK) ou un polyétheréthercétone (PEEK).

7. Soupape selon la revendication 5, **caractérisée en ce que** le matériau isolant est un matériau céramique, en particulier un matériau céramique fin émaillé.

8. Soupape selon l'une des revendications 1 à 7, **caractérisée en ce que** l'élément d'étanchéité (40) est fabriqué en un matériau électriquement conducteur, en particulier en une matière plastique dopée.

9. Soupape selon la revendication 8, **caractérisée en ce que** l'élément d'étanchéité (40) est fabriqué en graphite PA 12.
